(19) **Europäisches Patentamt / European Patent Office / Office européen des brevets**

(11) **EP 3 733 272 B1**

(12) # EUROPEAN PATENT SPECIFICATION

(45) Date of publication and mention
of the grant of the patent:
**02.08.2023 Bulletin 2023/31**

(21) Application number: **18896921.6**

(22) Date of filing: **29.08.2018**

(51) International Patent Classification (IPC):
**B01F 27/84** (2022.01)    **B01F 27/90** (2022.01)
**B01F 27/96** (2022.01)    **H01M 4/04** (2006.01)

(52) Cooperative Patent Classification (CPC):
**H01M 4/0404; B01F 27/84; B01F 27/90;**
**B01F 27/96;** B01F 35/92; B01F 2215/0481;
Y02E 60/10

(86) International application number:
**PCT/JP2018/031851**

(87) International publication number:
**WO 2019/130654 (04.07.2019 Gazette 2019/27)**

(54) **DEVICE FOR MANUFACTURING A SUSPENSION**

VORRICHTUNG ZUR HERSTELLUNG EINER SUSPENSION

DISPOSITIF DE FABRICATION D'UNE SUSPENSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2017 JP 2017249592**

(43) Date of publication of application:
**04.11.2020 Bulletin 2020/45**

(73) Proprietor: **Nakamura, Hiroki**
**Tokyo 170-0012 (JP)**

(72) Inventor: **Nakamura, Hiroki**
**Tokyo 170-0012 (JP)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
EP-A2- 0 043 047    CN-A- 104 368 284
CN-A- 106 621 919    DE-B- 1 221 126
JP-A- 2014 144 447    JP-A- 2014 223 581
JP-U- S 641 730    JP-U- S6 329 637
US-A- 4 197 019    US-A- 4 844 355
US-A- 4 854 720    US-A1- 2004 233 780
US-B1- 6 866 411

**Description**

Technical Field

The present invention relates to a device for manufacturing a suspension, and more particularly to a device for manufacturing a suspension used for manufacturing electrodes.

Background Art

A suspension made of electrode materials mixed together is commonly applied on a surface of an electrode substrate to form positive and negative electrodes of a secondary battery. For example, a suspension is applied on a surface of a metal foil to form positive and negative electrodes of a lithium ion secondary battery. Hereinafter, a suspension used for manufacturing electrodes is referred to as an electrode suspension.

A solvent and a powder material serving as an electrode material are mixed together to manufacture an electrode suspension of this type. That is, an electrode active material in the form of powder, a conductive material in the form of powder, and a binder in the form of powder are mixed together to form a powder material. A solvent is then brought into the mixture, i.e., the powder material. A rotating blade, for example, is used to mix together the solvent and the powder material to form an electrode suspension. Since properties of an electrode suspension greatly affect battery performance of a secondary battery, a process of uniformly mixing together electrode materials to manufacture a suspension is regarded as one of important processes in manufacturing electrodes and batteries. In such a process for manufacturing an electrode suspension, it is required to manufacture a less-impure suspension where there are no aggregates.

As one of such manufacturing devices, such a manufacturing device has been proposed that includes a mechanism that adjusts, through a drying method, a diameter of powder particles of a powder material used for an active material layer of a positive electrode of a battery, and a mechanism that mixes together a solvent and the powder material in which the diameter of powder particles has been adjusted (e.g., refer to Patent Literature 1). In addition, for example, Patent Literature 2 discloses a liquefying device comprising a stirring frame provided with an external stirring blade group and a central stirring shaft provided with a central stirring blade group, wherein the rotation direction of the central stirring shaft is opposite to the rotation direction of the stirring frame.

Citation List

Patent Literature

> Patent Literature 1: JP 2012-133931 A
> Patent Literature 2: CN 104 368 284 A

Summary of Invention

Technical Problem

In the device described in Patent Literature 1, a diameter of powder particles of a powder material is adjusted, leading to complicated adjustments during manufacturing. The present invention provides a device for manufacturing a suspension, that manufactures a less-impure suspension where there are no aggregates, and that does not require such an adjustment of a diameter of powder particles as described above.

Solution to Problem

A device for manufacturing a suspension, according to one aspect of the present invention, is a device according to claim 1.

According to the configuration, to uniformly mix together a plurality of materials, the first blades and the horizontal blade portions of the second blade cause the materials to flow in the up-down direction in the container. The first blades as well cause the materials to flow outwardly in the radial direction of the container. The clearance between each of the vertical blade portions of the second blade and the inner side surface of the container causes the materials to fully mix together. A less-impure suspension where there are no aggregates is therefore manufactured. As a result, to manufacture a suspension for electrodes, a less-impure electrode suspension is manufactured, contributing to improvements in battery performance, as well as to improvements in productivity through a shortened manufacturing time.

In the device for manufacturing a suspension, the second blade includes an attaching portion attached to the device, at a center of an upper portion, and coupling portions extending in the radial direction of the container to couple with each other the attaching portion and the vertical blade portions. According to the configuration, the attaching portion allows the second blade to be easily attached to the device. Adjusting the coupling portions in size allows the vertical blade portions to be easily adjusted in position.

In the device for manufacturing a suspension, the coupling portions, the vertical blade portions, and the horizontal blade portions of the second blade respectively form a pair. The pair of the coupling portions, the vertical blade portions, and the horizontal blade portions are arranged symmetrically around the attaching portion. According to the configuration, the pair of the coupling portions, the vertical blade portions, and the horizontal blade portions can uniformly and effectively mix together the materials.

In the device for manufacturing a suspension, the coupling portions in the pair extend symmetrically around the attaching portion and straightforward in the radial direction of the container. The coupling portions and the vertical blade portions are thus respectively smoothly coupled with each other. In such a configuration where the coupling portions each extend in the radial direction from the attaching portion at an angle, or the coupling portions and the vertical blade portions are each coupled at an angle, stress may be concentrated at a part during mixing, as well as an unintentional flow may occur during mixing. On the other hand, according to the above described configuration, it is possible to suppress stress from being concentrated, improving strength. It is also possible to suppress an unintentional flow from occurring, further uniformly and effectively mixing together the materials.

The device for manufacturing a suspension may be configured in such a manner that the second blade includes two pairs of the coupling portions, the vertical blade portions, and the horizontal blade portions, and the coupling portions, the vertical blade portions, and the horizontal blade portions are respectively arranged offset each at an angle of 90 degrees around the attaching portion. According to the configuration, the second blade includes the four coupling portions, the four vertical blade portions, and the four horizontal blade portions.

In the device for manufacturing a suspension, the horizontal blade portions of the second blade portion respectively have inclined surfaces inclined with respect to the vertical blade portions. According to the configuration, the materials are caused to effectively flow upwardly in the container, compared with a case where the horizontal blade portions of the second blade simply extend in a vertical direction. In a case where the first blades cause the materials to flow in an opposite direction, i.e., downwardly, the materials can be caused to collide with each other, effectively mixing together the materials.

In the device for manufacturing a suspension, the horizontal blade portions of the second blade respectively have openings at central portions. According to the configuration, by suppressing resistance while the horizontal blade portions are rotating, the materials can be effectively mixed together through smooth rotations, suppressing additional loads to be applied to the second blade.

In the device for manufacturing a suspension, the horizontal blade portions of the second blade cause the materials to flow upwardly in the container. According to the configuration, the horizontal blade portions bring the materials upwardly. The first blades then bring the materials in a direction toward a wall surface of the container to bring the materials to the vertical blade portions that mix together the materials. Efficient mixing can thus be achieved.

In the device for manufacturing a suspension, the first blades respectively include inclined surfaces inclined with respect to the vertical direction of the container. The first blades cause the materials to flow upwardly or downwardly in the container. According to the configuration, the materials in the container are caused to effectively flow in the up-down direction, in addition to flow outwardly in the radial direction, compared with a case where the first blades simply extend in the vertical direction. Efficient mixing can thus be achieved.

The device for manufacturing a suspension includes a first rotation means that causes the first blades to rotate, a second rotation means that causes the second blade to rotate, and a rotation drive control means that controls the first rotation means and the second rotation means. The rotation drive control means causes the first blades to rotate faster than the second blade. According to the configuration, the first blades and the second blade are allowed to rotate at different speeds. For example, the first blades take a role of causing the materials to flow in the container. The second blade takes a role of causing the materials to mix together. The first blades and the second blade are thus allowed to rotate at different, but appropriate speeds, in line with the respective roles for effective mixing of the materials.

In the device for manufacturing a suspension, the rotation drive control means causes, to mix together the materials, the first blades and the second blade to rotate in directions opposite to each other to cause the first blades to generate a downward flow in the container. The rotation drive control means causes, to degas the materials, the first blades and the second blade to rotate in an identical direction to cause the first blades to generate an upward flow in the container.

According to the configuration, in a case where the horizontal blade portions of the second blade cause the materials to flow upwardly in the container, whereas the first blades cause the materials to flow in an opposite direction, i.e., downwardly, the materials can be caused to collide with each other, effectively mixing the materials. On the other hand, in a case where the first blades cause, together with the horizontal blade portions of the second blade, to cause a flow to occur upwardly, the materials are caused to flow upwardly in the container, effectively degassing the materials.

In the device for manufacturing a suspension, the rotation drive control means preferably causes the first blades to rotate at a speed falling within a range from 600 to 1800 rpm, and the second blade to rotate at a speed falling within a range from 3 to 20 rpm.

In the device for manufacturing a suspension, the clearance preferably falls within a range from 2 to 100 mm. If the clearance is narrower than 2 mm, the suspension would rotate together with the blades, preventing the materials in various kinds from being fully mixed together. If the clearance is wider than 100 mm, the materials in various kinds would not also be effectively and fully mixed together. Advantageous Effects of Invention

To mix together a plurality of materials, under the present invention, the horizontal blade portions of the second blade cause the materials to flow upwardly. The first blades as well cause the materials to flow outwardly in the radial direction. The clearance between each of the vertical blade portions and the inner side surface of the container allows the materials to be uniformly mixed together. A less-impure suspension can thus be manufactured.

Brief Description of Drawings

FIG. 1 is a front view illustrating a schematic configuration of a device for manufacturing a suspension, according to an embodiment.

FIG. 2 is a perspective view illustrating the schematic configuration of the device for manufacturing a suspension, according to the embodiment.

FIG. 3 is a side view illustrating the schematic configuration of the device for manufacturing a suspension, according to the embodiment.

FIG. 4 is a plan view illustrating the schematic configuration of the device for manufacturing a suspension, according to the embodiment.

FIG. 5 is an explanatory view of an inlet/outlet portion for materials or a suspension into/from a container.

FIG. 6 is a front view illustrating a schematic configuration of a modified example of the device for manufacturing a suspension.

Description of Embodiments

An embodiment of the present invention will now be described below with reference to the accompanying drawings. However, the present invention is not limited to the embodiment. In the present embodiment, as an example, a device for manufacturing a suspension (hereinafter referred to as "electrode suspension") used for manufacturing electrodes of a battery will be in particular described. However, the present invention is not limited to the embodiment. The device is also applicable to suspensions used for other purposes than electrodes.

[1. Structure of manufacturing device]

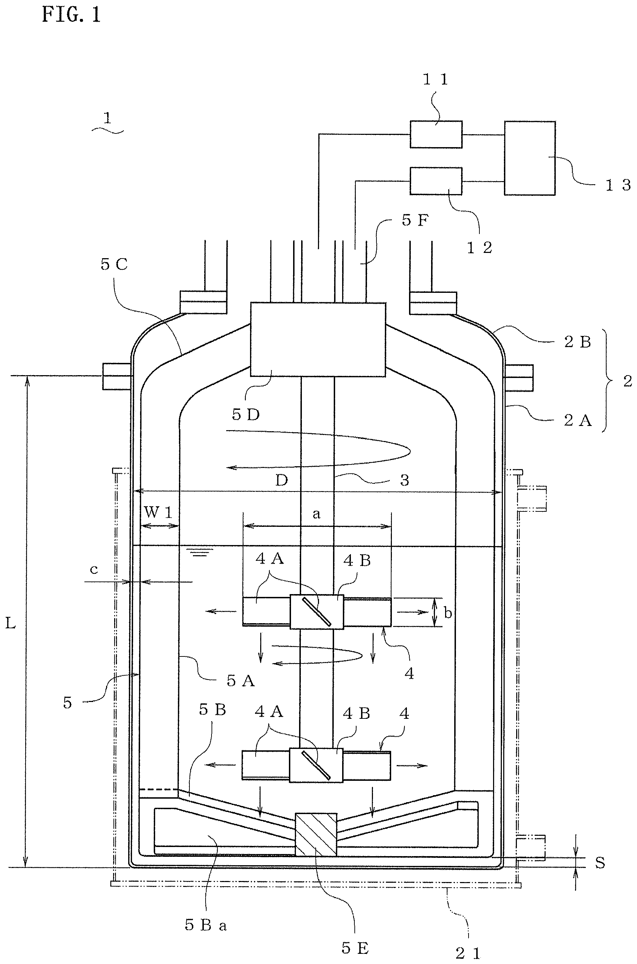

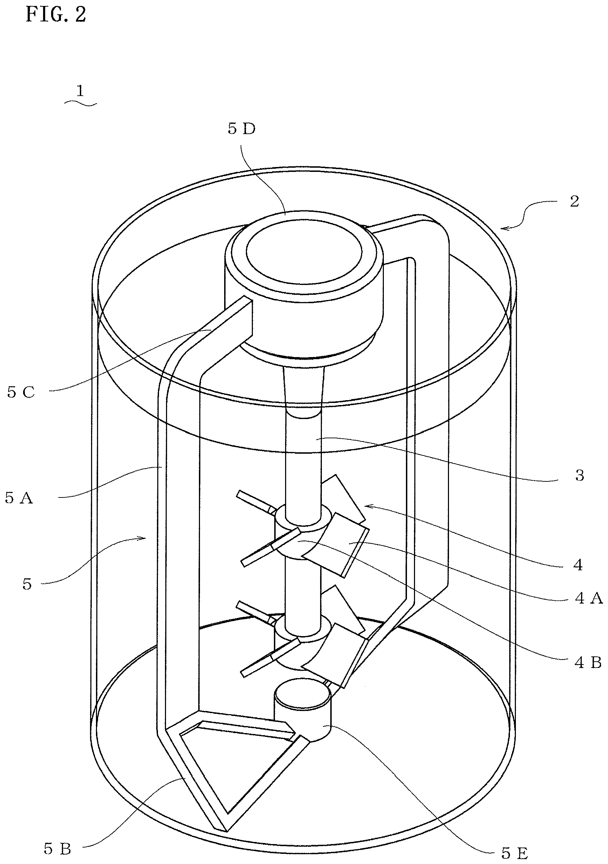

FIG. 1 is a front view illustrating a schematic configuration of a device for manufacturing a suspension, according to an embodiment of the present invention. FIG. 2 is a perspective view of the device. As illustrated in FIGS. 1 and 2, a device 1 for manufacturing an electrode suspension includes, as main components, a container 2 that accommodates a plurality of electrode materials, a rotating shaft 3 extending in an up-down direction at a center of the container 2, and a pair of first blades 4, and a second blade 5.

The pair of first blades 4 are vertically arranged on the rotating shaft 3 at a predetermined gap. The second blade 5 is arranged in the container 2 to surround the pair of first blades 4. In the present embodiment, the first blades 4 form a pair. However, the present invention is not limited to the embodiment. Such a configuration may be applicable that includes the only one first blade 4, for example.

The container 2 includes a container main body 2A having an opening that opens upwardly, and a lid portion 2B closing the opening of the container main body 2A. To mix together the electrode materials, the electrode materials are first filled to a position above the first blades 4. The container 2 is accommodated in a cooling container 21.

The first blades 4 each include four blade portions 4A. The four blade portions 4A are respectively attached, at intervals each at an angle of 90° in a circumferential direction, to outer peripheral portions of cylindrical portions 4B positioned at the center. The four blade portions 4A are also respectively attached in an inclined manner each at an angle of 45° with respect to axis lines of the cylindrical portions 4B. The blade portions 4A are mere examples of the present embodiment in terms of number and inclination angle. The present invention is not limited to the embodiment.

The rotating shaft 3 passes through the cylindrical portions 4B. The cylindrical portions 4B are attached to the rotating shaft. The first blades 4 cause the electrode materials to flow in the up-down direction in the container 2 in accordance with a rotation direction of the rotating shaft 3. The first blades 4 as well cause the electrode materials to flow outwardly in a radial direction of the container 2. The blade portions 4A as described above are respectively arranged to form a cross shape in a plan view. The blade portions 4A respectively arranged to form a cross shape are mere examples of the present embodiment. The present invention is not limited to the embodiment.

Dimensions of the first blades 4 and the container 2 each preferably fall within a range calculated from an expression described below, in manufacturing a suspension. In here, an expression 1 described below represents a relationship between a length a in a horizontal direction of each of the blade portions 4A of the first blades 4 and an inner diameter D of the container main body 2A of the container 2.

$$a = D / (3 \text{ to } 4) \qquad \text{(Expression 1)}$$

An expression 2 described below represents a relationship between a height b in a vertical direction of each of the blade portions 4A of the first blades 4 and a height L of the container main body 2A of the container 2.

$$b = L / (5 \text{ to } 100) \qquad \text{(Expression 2)}$$

An expression 3 described below represents a relationship between the inner diameter D and the height L of the container main body 2A of the container 2.

$$D / L = 0.3 \text{ to } 3 \qquad \text{(Expression 3)}$$

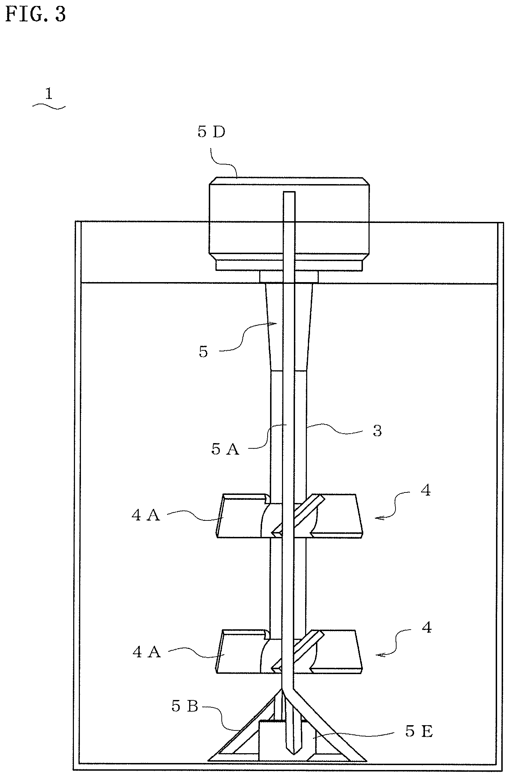

The second blade 5 includes two vertical blade portions 5A each having a constant width in the radial direction of the container 2 and extending in the up-down direction, and two horizontal blade portions 5B that respectively have end portions coupled to lower end portions of the vertical blade portions 5A, and other end portions inwardly extending in the radial direction, and that cause the electrode materials to flow upwardly. That is, the vertical blade portions 5A and the horizontal blade portions 5B are arranged at equal intervals each at an angle of 180 degrees in the circumferential direction to each form a straight line in a plan view (see FIG. 3).

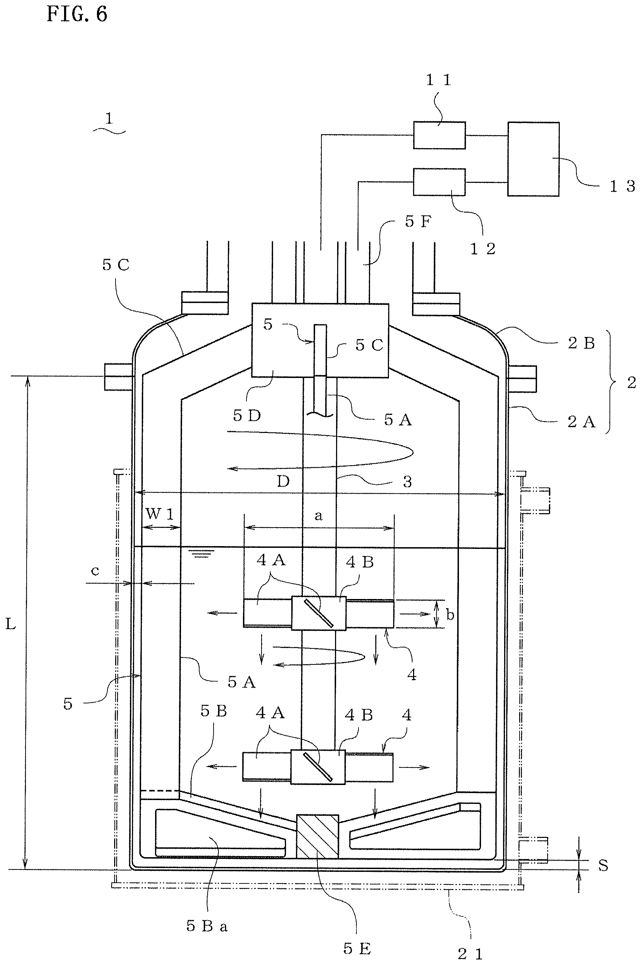

The vertical blade portions 5A and the horizontal blade portions 5B are mere examples of the present embodiment in terms of number and the form of the straight line. The present invention is not limited to the embodiment. Such a configuration may be applied, for example, that the four vertical blade portions 5A and the four horizontal blade portions 5B are arranged at equal intervals each at an angle of 90 degrees in the circumferential direction to form a cross shape in a plan view (see FIG. 6).

The vertical blade portions 5A are arranged to provide a clearance c between each of the vertical blade portions 5A and an inner peripheral surface of the container 2. Upper end portions are coupled to a mounting-purpose cylindrical portion 5D via inclined blade portions 5C extending inwardly in the radial direction and upwardly in an inclined manner. That is, the inclined blade portions 5C couple the vertical blade portions 5A and the mounting-purpose cylindrical upper portion 5D. The vertical blade portions 5A thus respectively extend smoothly from the inclined blade portions 5C.

The rotating shaft 3 extends to pass through the mounting-purpose cylindrical portion 5D. The rotating shaft 3 is then linked to a first rotation means 11 that causes the first blades 4 to rotate forward or backward as the rotating shaft 3 rotates. A shaft portion 5F having a circular cylindrical shape is coupled to the mounting-purpose cylindrical portion 5D. The shaft portion 5F is linked to a second rotation means 12 that causes the second blade 5 to rotate as the shaft portion 5F rotates.

The horizontal blade portions 5B respectively have the end portions that are coupled to the lower end portions of the vertical blade portions 5A and that are positioned adjacent to the inner peripheral surface of the container 2, and the other end portions that each have a width that is gradually narrowing, that extend in the horizontal direction, and that are coupled to a central shaft portion 5E positioned at the center of the container 2. The central shaft portion 5E is coaxial with the rotating shaft 3 of the first blades 4.

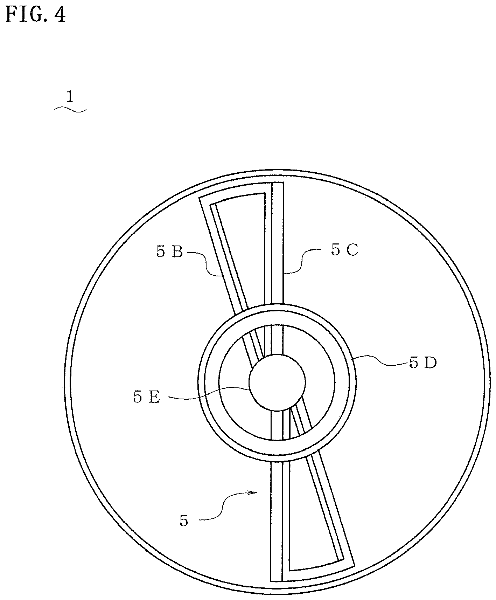

As illustrated in a side view in FIG. 4, the horizontal blade portions 5B respectively have inclined plate shapes each inclined at an angle of approximately 45° with respect to the vertical blade portions 5A, where openings 5Ba are respectively provided at central portions, to effectively cause the electrode materials to flow upwardly. The horizontal blade portions 5B are mere examples of the present embodiment in terms of inclination angle. The present invention is not limited to the embodiment. Lower surfaces of the horizontal blade portions 5B may be flat surfaces substantially parallel to an inner bottom surface on a lower side of the container 2.

A dimension of the second blade 5 preferably falls within a range calculated from an expression described below, in manufacturing a suspension. In here, an expression 4 described below represents a relationship between a width W1 of each of the vertical blade portions 5A of the second blade 5 and the inner diameter D of the container 2.

$$W1 = D / (2.5 \text{ to } 40) \qquad \text{(Expression 4)}$$

An expression 5 described below represents a relationship between the width W1 of each of the vertical blade portions 5A of the second blade 5 and the clearance c between each of the vertical blade portions 5A and the inner peripheral surface of the container 2.

$$c = W1 / (0.1 \text{ to } 30) \qquad \text{(Expression 5)}$$

A range that an expression 6 described below defines is preferable. A range that an expression 7 described below defines is more preferable.

$$W1 = D / (3 \text{ to } 20), c = W1 / (2 \text{ to } 15) \qquad \text{(Expression 6)}$$

$$W1 = D / 10, c = W1 / 5 \qquad \text{(Expression 7)}$$

In the present embodiment, the clearance c is specified to 20 mm, as an example. A clearance S between each of bottom surfaces of the horizontal blade portions 5B and the inner bottom surface of the container 2 preferably falls within a range of S = 2 to 50 mm, and more preferably is 15 mm.

The first rotation means 11 rotationally drives the first blades 4. The second rotation means 12 rotationally drives the second blade 5. The first rotation means 11 and the second rotation means 12 are linked to a rotation drive control means 13. The rotation drive control means 13 drives and controls the first blades 4 to rotate faster than the second blade 5.

The first rotation means 11 and the second rotation means 12 are respectively and independently controlled for rotations. That is, the rotation drive control means 13 causes, in accordance with viscosity and other factors of the electrode materials, the first blades 4 to rotate at a speed falling within a range from 300 to 6000 rpm, and the second blade 5 to rotate at a speed falling within a range from 0 to 180 rpm. The first blades 4 are preferably caused to rotate at a speed falling within a range from 600 to 1800 rpm. The second blade 5 is preferably caused to rotate at a speed falling within a range from 3 to 20 rpm.

The second rotation means 12 that causes the second blade 5 to rotate always causes an upward flow to occur in the container 2. The first rotation means 11 that causes the first blades 4 to rotate meanwhile selects an upward flow or a downward flow, depending on whether the electrode materials are to be mixed or degassed.

That is, to mix together the electrode materials, the first rotation means 11 causes the first blades 4 to rotate in a direction opposite to a rotation direction of the second blade 5 to cause a downward flow to occur in the container 2 as the first blades 4 rotate.

On the other hand, to degas the electrode materials, the first rotation means 11 causes the first blades 4 to rotate in a direction identical to the rotation direction of the second blade 5 to cause an upward flow to occur in the container 2 as the first blades 4 rotate.

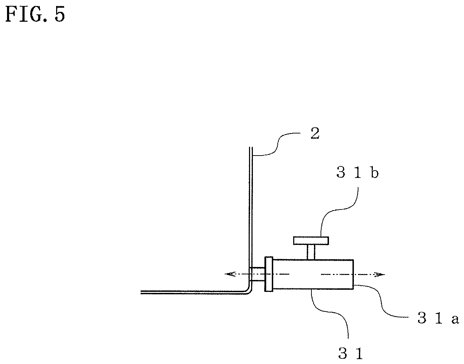

As illustrated in FIG. 5, a valve means 31 provided at a lower portion of the container 2 is used to allow the electrode materials or an electrode suspension to enter or exit the container 2. The valve means 31 includes a coupling port 31a coupled to a non-illustrated storage tank for an electrode suspension, and a handle 31b that is manually operated to allow the electrode suspension, for example, to enter or exit. The configuration in which the valve means 31 is provided on a side at the lower portion of the container 2 is a mere example of the present embodiment. Such a configuration may be applied that the valve means 31 is provided on the lower side at the lower portion of the container 2.

[2. Operation]

Next, how the manufacturing device 1 operates, in particular, how the first blades 4 and the second blade 5 move, will be described. To mix together the electrode materials, the container 2 is first filled with the electrode materials. The first blades 4 and the second blade 5 are then operated. At this time, the first blades 4 and the second blade 5 are rotated in directions opposite to each other.

As a result, an upward flow of the electrode materials, which is generated by the horizontal blade portions 5B of the second blade 5 rotating at a low speed, collides with a downward flow generated by the first blades 4 rotating at a high speed, causing the flows to change in direction to generate an outward flow in the radial direction. The outward flow, as well as another outward flow in the radial direction, which is generated as the first blades 4 themselves rotate, both bring the electrode materials toward an inner peripheral surface side of the container 2. The clearance between each of the vertical blade portions 5A that are rotating and the inner peripheral surface of the container 2 then allows the materials to positively mix together to form a less-impure electrode suspension where there are no aggregates.

In particular, since the central shaft portion 5E to which the horizontal blade portions 5B are coupled is coaxial with the rotating shaft 3 of the first blades 4, a downward flow generated by the first blades 4 smoothly changes an upward flow generated by the horizontal blade portions 5B into an outward flow in the radial direction. It is therefore possible to improve not only a battery in characteristics, but also productivity through a shortened manufacturing time.

On the other hand, to degas the electrode materials, the first blades 4 and the second blade 5 are rotated in an identical direction. As a result, an upward flow of the electrode materials, which is generated by the horizontal blade portions 5B of the second blade 5 rotating at a low speed, is caused to flow further upwardly as the first blades 4 rotate at a high speed, allowing air in the electrode materials to evacuate into an upper space of the container 2 for degassing.

After the electrode materials are mixed together, are degassed, and then are further fully mixed together to form an electrode suspension, the electrode suspension is allowed to exit the valve means 31 and collected in the non-illustrated storage tank. Using the device for manufacturing an electrode suspension, according to the present embodiment, as described above, to mix together various kinds of electrode materials can uniformly mix the materials, compared with such a conventional device. Using an electrode suspension manufactured as described above improves battery performance.

[3. Other embodiments]

The preferred embodiment of the present invention has been described above with reference to the accompanying drawings. However, various additions, changes, or deletions can be made without departing from the spirit of the present invention. The two vertical blade portions 5A and the two horizontal blade portions 5B are provided in the above described embodiment. Such a configuration may be applied, for example, that the four vertical blade portions 5A are provided (see FIG. 6). Such a configuration may be applied that only one blade portion or six blade portions is or are provided. In the above described embodiment, the central shaft portion 5E to which the pair of the horizontal blade portions 5B are coupled has a cylindrical column shape. However, the present invention is not limited to the embodiment. Such a configuration may be applied that the central shaft portion has a rectangular column shape or a plate shape to which the pair of the horizontal blade portions 5B are smoothly joined.

The valve means 31 serves as an inlet/outlet of the container 2 in the above described embodiment, for example. However, the present invention is not limited to the embodiment. A pneumatic means can be used for automation. In this way, there is no dead space, eliminating residues. Such a configuration is effective, particularly for large devices with a capacity of at least 3000 liters, that a valve is mounted in a circumferential direction of a container. The configuration allows the valve to be open while blades are allowed to rotate, achieving smooth discharging with less residues at a bottom portion of the container.

The container according to the present embodiment has a bottomed circular cylindrical shape having the bottom surface substantially parallel to the ground. However, the present invention is not limited to the embodiment. A dish-shaped container having a bottom surface projecting downward may be used. Therefore, such configurations are also included within the scope of the present invention as it is defined by the claims.

Reference Signs List

| 1 | device for manufacturing electrode suspension |
| 2 | container |
| 2A | container main body |
| 2B | lid portion |
| 3 | rotating shaft |
| 4 | first blade |
| 4A | blade portion |
| 4B | cylindrical portion |
| 5 | second blade |
| 5A | vertical blade portion |
| 5B | horizontal blade portion |
| 5Ba | opening |

| 5C | inclined blade portion |
| 5D | mounting-purpose cylindrical portion |
| 5E | central shaft portion |
| 11 | first rotation means |
| 12 | second rotation means |
| 13 | rotation drive control means |
| 21 | cooling container |
| 31 | valve means |

**Claims**

1. A device (1) for manufacturing a suspension by mixing together a plurality of materials, the device (1) comprising:

  a container (2) that accommodates the materials;
  first blades (4) rotatably arranged in the container (2); and
  a second blade (5) rotatably arranged to surround the first blades (4), the second blade (5) including

    vertical blade portions (5A) that each have a predetermined width in a radial direction of the container (2), and that extend in an up-down direction, and each creating a predetermined clearance with an inner side surface of the container (2), and
    horizontal blade portions (5B) respectively having end portions coupled to lower end portions of the vertical blade portions (5A), and other end portions extending inwardly in the radial direction,

  the second blade (5) having the predetermined clearance between each of the vertical blade portions (5A) and an inner side surface of the container (2), wherein the device (1) further comprises
  first rotation means (11) that causes the first blades (4) to rotate;
  second rotation means (12) that causes the second blade (5) to rotate; and
  rotation drive control means (13) that controls the first rotation means (11) and the second rotation means (12), the rotation drive control means (13) causing the first blades (4) to rotate faster than the second blade (5), wherein
  the rotation drive control means (13) is configured to

    rotate the first blades (4) and the second blade (5) in directions opposite to each other to cause the first blades (4) to generate a downward flow in the container (2) for mixing together the materials, and, rotate the first blades (4) and the second blade (5) in an identical direction to cause the first blades (4) to generate an upward flow in the container (2) for degassing the materials,

  wherein
  the rotation drive control means (13) is configured to

    rotate the first blades (4) at a speed falling within a range from 600 to 1800 rpm, and
    rotate the second blade (5) at a speed falling within a range from 3 to 20 rpm.

2. The device (1) for manufacturing a suspension, according to claim 1, wherein

  the second blade (5) further includes a central shaft portion (5E) arranged at a center of the container (2) and coupled to the other end portions of the horizontal blade portions (5B), wherein the central shaft portion (5E) is coaxial with a rotating shaft (3) of the first blade (4),
  the horizontal blade portions (5B) each including, when viewed in a vertical direction,

    a first portion extending along the inner side surface of the container (2),
    a second portion extending inwardly in the radial direction from an end portion, on a side adjacent to each of the vertical blade portions (5A), of the first portion and coupled to the central shaft portion (5E), and
    a third portion extending inwardly in the radial direction from another end portion, on a side opposite to the side adjacent to each of the vertical blade portions (5A), of the first portion to gradually reduce a distance to the second portion and coupled to the central shaft portion (5E),

8

the first to third portions surrounding an opening having a frame shape formed at a central portion.

3. The device (1) for manufacturing a suspension, according to claim 2, wherein

the first portion is inclined to be positioned downwardly as being away from each of the vertical blade portions (5A), the second portion has

an outer portion coupled to each of the lower end portions of the vertical blade portions (5A) and extending parallel to a bottom surface of the container (2), and
an inner portion inclined downwardly from an end portion, on a side adjacent to the center, of the outer portion and coupled to the central shaft portion (5E), and

a third portion extending parallel to the outer portion of the second portion.

4. The device (1) for manufacturing a suspension, according to any one of claims 1 to 3, wherein the second blade (5) includes

an attaching portion attached to the device (1), at a center of an upper portion, and
coupling portions extending in the radial direction of the container (2) to couple with each other the attaching portion and the vertical blade portions (5A).

5. The device (1) for manufacturing a suspension, according to claim 4, wherein

in the second blade (5), the coupling portions, the vertical blade portions (5A), and the horizontal blade portions (5B) respectively form a pair, and
the pair of the coupling portions, the vertical blade portions (5A), and the horizontal blade portions (5B) are arranged symmetrically around the attaching portion.

6. The device (1) for manufacturing a suspension, according to claim 5, wherein

the coupling portions in the pair extend symmetrically around the attaching portion and straightforward in the radial direction of the container (2), and
the coupling portions and the vertical blade portions (5A) are respectively smoothly coupled with each other.

7. The device (1) for manufacturing a suspension, according to any one of claims 1 to 3, wherein the central shaft portion (5E) has a rectangular shape or a plate shape to which the pair of the horizontal blade portions (5B) are smoothly coupled with each other.

8. The device (1) for manufacturing a suspension, according to claim 4, wherein

the second blade (5) includes two pairs of the coupling portions, the vertical blade portions (5A), and the horizontal blade portions (5B), and
the coupling portions, the vertical blade portions (5A), and the horizontal blade portions (5B) are respectively arranged offset each at an angle of 90 degrees around the attaching portion.

9. The device (1) for manufacturing a suspension, according to any one of claims 1 to 3, wherein, in the second blade (5), the horizontal blade portions (5B) respectively have inclined surfaces inclined with respect to the vertical blade portions (5A).

10. The device (1) for manufacturing a suspension, according to any one of claims 1 to 3, wherein the horizontal blade portions (5B) of the second blade (5) cause the materials to flow upwardly in the container (2).

11. The device (1) for manufacturing a suspension, according to any one of claims 1 to 3, wherein the first blades (4) respectively include inclined surfaces inclined with respect to a vertical direction of the container (2).

12. The device (1) for manufacturing a suspension, according to any one of claims 1 to 3, wherein the first blades (4) cause the materials to flow upwardly or downwardly in the container (2).

**13.** The device (1) for manufacturing a suspension, according to any one of claims 1 to 3, wherein the clearance ranges from 2 to 100 mm.

**Patentansprüche**

**1.** Eine Vorrichtung (1) zum Herstellen einer Suspension durch Vermischen einer Mehrzahl von Materialien, wobei die Vorrichtung (1) folgende Merkmale aufweist:

einen Behälter (2), der die Materialien aufnimmt;
erste Klingen (4), die in dem Behälter drehbar angeordnet sind; und
eine zweite Klinge (5), die drehbar angeordnet ist, um die ersten Klingen (4) zu umgeben, wobei die zweite Klinge (5) Folgendes umfasst:

vertikale Klingenabschnitte (5A), die jeweils eine vorbestimmte Breite in einer radialen Richtung des Behälters (2) aufweisen und die sich in einer Oben-Unten-Richtung erstrecken und jeweils einen vorbestimmen Zwischenraum mit einer inneren Seitenoberfläche des Behälters (2) erzeugen, und
horizontale Klingenabschnitte (5B), die jeweils Endabschnitte, die mit unteren Endabschnitten der vertikalen Klingenabschnitte (5A) gekoppelt sind, und andere Endabschnitte aufweisen, die sich in der radialen Richtung nach innen erstrecken,

wobei die zweite Klinge (5) den vorbestimmten Zwischenraum zwischen jedem der vertikalen Klingenabschnitte (5A) und einer inneren Seitenoberfläche des Behälters (2) aufweist, wobei die Vorrichtung ferner folgende Merkmale aufweist:

eine erste Dreheinrichtung (11), die bewirkt, dass sich die ersten Klingen (4) drehen;
eine zweite Dreheinrichtung (12), die bewirkt, dass sich die zweite Klinge (5) dreht; und
eine Drehantriebssteuerungseinrichtung (13), die die erste Dreheinrichtung (11) und die zweite Dreheinrichtung (12) steuert, wobei die Drehantriebssteuereinrichtung (13) bewirkt, dass sich die ersten Klingen (4) schneller drehen als die zweite Klinge (5), wobei
die Drehantriebssteuereinrichtung (13) konfiguriert ist, Folgendes zu tun:

Drehen der ersten Klingen (4) und der zweiten Klinge (5) in einander entgegengesetzten Richtungen, um zu bewirken, dass die ersten Klingen (4) einen Abwärtsfluss in dem Behälter (2) zum Vermischen der Materialien generieren, und
Drehen der ersten Klingen (4) und der zweiten Klinge (5) in einer identischen Richtung, um zu bewirken, dass die ersten Klingen (4) einen Aufwärtsfluss in dem Behälter (2) zum Entgasen der Materialien generieren, wobei

die Drehantriebssteuereinrichtung (13) konfiguriert ist, Folgendes zu tun:

Drehen der ersten Klingen (4) bei einer Geschwindigkeit, die in einen Bereich von 600 bis 1800 U/min fällt, und
Drehen der zweiten Klinge (5) bei einer Geschwindigkeit, die in einen Bereich von 3 bis 20 U/min fällt.

**2.** Die Vorrichtung (1) zum Herstellen einer Suspension gemäß Anspruch 1, bei der die zweite Klinge ferner einen mittleren Wellenabschnitt (5E) umfasst, der an einem Mittelpunkt des Behälters (2) angeordnet ist und mit den anderen Endabschnitten der horizontalen Klingenabschnitte (5B) gekoppelt ist, wobei der mittlere Wellenabschnitt (5E) koaxial zu einer Drehwelle (3) der ersten Klinge (4) ist,
wobei die horizontalen Klingenabschnitte (5B) jeweils, wenn in einer vertikalen Richtung betrachtet, folgende Merkmale aufweisen:

einen ersten Abschnitt, der sich entlang der inneren Seitenoberfläche des Behälters (2) erstreckt;
einen zweiten Abschnitt, der sich in der radialen Richtung von einem Endabschnitt, an einer Seite, die zu jedem der vertikalen Klingenabschnitte (5A) benachbart ist, des ersten Abschnitts nach innen erstreckt und mit dem mittleren Wellenabschnitt (5E) gekoppelt ist, und
einen dritten Abschnitt, der sich in der radialen Richtung von einem anderen Endabschnitt, an einer Seite gegenüber der Seite, die zu jeden der vertikalen Klingenabschnitte (5A) benachbart ist, des ersten Abschnitts nach innen erstreckt, um allmählich eine Entfernung zu dem zweiten Abschnitt zu reduzieren, und mit dem mittleren Wellenabschnitt (5E) gekoppelt ist, wobei der erste bis dritte Abschnitt eine Öffnung mit einer Rahmenform umgeben, die an einem mittleren Abschnitt gebildet ist.

3. Die Vorrichtung (1) zum Herstellen einer Suspension gemäß Anspruch 2, bei der

der erste Abschnitt geneigt ist, um abwärts positioniert zu sein, getrennt von jedem der vertikalen Klingenabschnitte (5A),
der zweite Abschnitt folgende Merkmale aufweist:

einen äußeren Abschnitt, der mit jedem der unteren Endabschnitte der vertikalen Klingenabschnitte (5A) gekoppelt ist, und sich parallel zu einer unteren Oberfläche des Behälters (2) erstreckt, und
einen inneren Abschnitt, der abwärts geneigt ist von einem Endabschnitt, an einer zu dem Mittelpunkt benachbarten Seite, des äußeren Abschnitts und mit dem mittleren Wellenabschnitt (5E) gekoppelt ist, und

ein dritter Abschnitt sich parallel zu dem äußeren Abschnitt des zweiten Abschnitts erstreckt.

4. Die Vorrichtung (1) zum Herstellen einer Suspension gemäß einem der Ansprüche 1 bis 3, bei der die zweite Klinge (5) folgende Merkmale umfasst:

einen Befestigungsabschnitt, der an der Vorrichtung (1) befestigt ist, an einem Mittelpunkt eines oberen Abschnitts, und
Kopplungsabschnitte, die sich in der radialen Richtung des Behälters (2) erstrecken, um den Befestigungsabschnitt und die vertikalen Klingenabschnitte (5A) miteinander zu koppeln.

5. Die Vorrichtung (1) zum Herstellen einer Suspension gemäß Anspruch 4, bei der

in der zweiten Klinge (5) die Kopplungsabschnitte, die vertikalen Klingenabschnitte (5A) und die horizontalen Klingenabschnitte (5B) jeweils ein Paar bilden, und
das Paar der Kopplungsabschnitte, der vertikalen Klingenabschnitte (5A) und horizontalen Klingenabschnitte (5B) symmetrisch um den Befestigungsabschnitt angeordnet sind.

6. Die Vorrichtung (1) zum Herstellen einer Suspension gemäß Anspruch 5, bei der

die Kopplungsabschnitte in dem Paar sich symmetrisch um den Befestigungsabschnitt und geradeaus in der radialen Richtung des Behälters (2) erstrecken, und
die Kopplungsabschnitte und die vertikalen Klingenabschnitte (5A) jeweils reibungslos miteinander gekoppelt sind.

7. Die Vorrichtung (1) zum Herstellen einer Suspension gemäß einem der Ansprüche 1 bis 3, bei der der mittlere Wellenabschnitt (5E) eine rechteckige Form oder eine Plattenform aufweist, mit der das Paar der horizontalen Klingenabschnitte (5B) reibungslos miteinander gekoppelt ist.

8. Die Vorrichtung (1) zum Herstellen einer Suspension gemäß Anspruch 4, bei der

die zweite Klinge (5) zwei Paare der Kopplungsabschnitte, der vertikalen Klingenabschnitte (5A) und der horizontalen Klingenabschnitte (5B) aufweist, und
die Kopplungsabschnitte, die vertikalen Klingenabschnitte (5A) und die horizontalen Klingenabschnitte (5B) jeweils versetzt zueinander angeordnet sind, mit einem Winkel von 90° um den Befestigungsabschnitt.

9. Die Vorrichtung (1) zum Herstellen einer Suspension gemäß einem der Ansprüche 1 bis 3, bei der die horizontalen Klingenabschnitte (5B) in der zweiten Klinge (5) jeweils geneigte Oberflächen aufweisen, die hinsichtlich der vertikalen Klingenabschnitte (5A) geneigt sind.

10. Die Vorrichtung (1) zum Herstellen einer Suspension gemäß einem der Ansprüche 1 bis 3, bei der die horizontalen Klingenabschnitte (5B) der zweiten Klinge (5) bewirken, dass die Materialien in dem Behälter (2) aufwärts fließen.

11. Die Vorrichtung (1) zum Herstellen einer Suspension gemäß einem der Ansprüche 1 bis 3, bei der die ersten Klingen (4) jeweils geneigte Oberflächen umfassen, die hinsichtlich einer vertikalen Richtung des Behälters (2) geneigt sind.

12. Die Vorrichtung (1) zum Herstellen einer Suspension gemäß einem der Ansprüche 1 bis 3, bei der die ersten Klingen (4) bewirken, dass die Materialien in dem Behälter (2) aufwärts oder abwärts fließen.

13. Die Vorrichtung zum Herstellen einer Suspension gemäß einem der Ansprüche 1 bis 3, bei der der Zwischenraum von 2 bis 100 mm reicht.

**Revendications**

1. Dispositif (1) de fabrication d'une suspension en mélangeant une pluralité de matériaux, le dispositif (1) comprenant:

   un récipient (2) qui accueille les matériaux;
   des premières lames (4) disposées de manière rotative dans le récipient (2); et
   une deuxième lame (5) disposée de manière rotative de manière à entourer les premières lames (4), la deuxième lame (5) comportant

   des parties de lame verticales (5A) qui présentent, chacune, une largeur prédéterminée dans une direction radiale du récipient (2), et qui s'étendent dans une direction de haut en bas, et créant, chacune, un espace libre prédéterminé par rapport à une surface latérale intérieure du récipient (2), et
   des parties de lame horizontales (5B) présentant respectivement des parties d'extrémité couplées aux parties d'extrémité inférieures des parties de lame verticales (5A), et d'autres parties d'extrémité s'étendant vers l'intérieur dans la direction radiale,

   la deuxième lame (5) présentant l'espace libre prédéterminé entre chacune des parties de lame verticales (5A) et une surface latérale intérieure du récipient (2),
   dans lequel le dispositif (1) comprend par ailleurs:

   un premier moyen de rotation (11) qui fait tourner les premières lames (4);
   un deuxième moyen de rotation (12) qui fait tourner la deuxième lame (5); et
   un moyen de commande d'entraînement en rotation (13) qui commande le premier moyen de rotation (11) et le deuxième moyen de rotation (12), le moyen de commande d'entraînement en rotation (13) faisant tourner les premières lames (4) plus rapidement que la deuxième lame (5),

   dans lequel
   le moyen de commande d'entraînement en rotation (13) est configuré pour

   faire tourner les premières lames (4) et la deuxième lame (5) dans des directions opposées l'une à l'autre pour amener les premières lames (4) à générer un flux vers le bas dans le récipient (2) pour mélanger entre eux les matériaux, et
   faire tourner les premières lames (4) et la deuxième lame (5) dans une direction identique pour amener les premières lames (4) à générer un flux vers le haut dans le récipient (2) pour dégazer les matériaux,

   dans lequel
   le moyen de commande d'entraînement en rotation (13) est configuré pour

   faire tourner les premières lames (4) à une vitesse qui tombe dans une plage de 600 à 1800 tours/min, et
   faire tourner la deuxième lame (5) à une vitesse qui tombe dans une plage de 3 à 20 tours/min.

2. Dispositif (1) de fabrication d'une suspension selon la revendication 1, dans lequel

   la deuxième lame (5) comporte par ailleurs une partie d'arbre centrale (5E) disposée au centre du récipient (2) et couplée aux autres parties d'extrémité des parties de lame horizontales (5B), la partie d'arbre centrale (5E) étant coaxiale par rapport à un arbre rotatif (3) de la première lame (4),
   les parties de lame horizontales (5B) comportant, chacune, lorsque vues dans une direction verticale,

   une première partie s'étendant le long de la surface latérale intérieure du récipient (2),

une deuxième partie s'étendant vers l'intérieur dans la direction radiale à partir d'une partie d'extrémité, sur un côté adjacent à chacune des parties de lame verticales (5A), de la première partie et couplée à la partie d'arbre centrale (5E), et

une troisième partie s'étendant vers l'intérieur dans la direction radiale à partir d'une autre partie d'extrémité, sur un côté opposé au côté adjacent à chacune des parties de lame verticales (5A), de la première partie, pour réduire progressivement une distance par rapport à la deuxième partie et couplée à la partie d'arbre centrale (5E),

les première à troisième parties entourant une ouverture présentant une forme de cadre formée au niveau d'une partie centrale.

3. Dispositif (1) de fabrication d'une suspension selon la revendication 2, dans lequel

la première partie est inclinée de manière à être positionnée vers le bas de manière éloignée de chacune des parties de lame verticales (5A),
la deuxième partie présente

une partie extérieure couplée à chacune des parties d'extrémité inférieure des parties de lame verticales (5A) et s'étendant de manière parallèle à une surface de fond du récipient (2), et
une partie intérieure inclinée vers le bas à partir d'une partie d'extrémité, sur un côté adjacent au centre, de la partie extérieure et couplée à la partie d'arbre centrale (5E), et

une troisième partie s'étendant de manière parallèle à la partie extérieure de la deuxième partie.

4. Dispositif (1) de fabrication d'une suspension selon l'une quelconque des revendications 1 à 3, dans lequel la deuxième lame (5) comporte

une partie de fixation fixée au dispositif (1), au centre d'une partie supérieure, et
des parties de couplage s'étendant dans la direction radiale du récipient (2) destinées à coupler l'une à l'autre la partie de fixation et les parties de lame verticales (5A).

5. Dispositif (1) de fabrication d'une suspension selon la revendication 4, dans lequel

dans la deuxième lame (5), les parties de couplage, les parties de lame verticales (5A) et les parties de lame horizontales (5B) forment respectivement une paire, et
la paire des parties de couplage, les parties de lame verticales (5A) et les parties de lame horizontales (5B) sont disposées de manière symétrique autour de la partie de fixation.

6. Dispositif (1) de fabrication d'une suspension selon la revendication 5, dans lequel

les parties de couplage dans la paire s'étendent de manière symétrique autour de la partie de fixation et directement dans la direction radiale du récipient (2), et
les parties de couplage et les parties de lame verticales (5A) sont respectivement couplées de manière régulière l'une à l'autre.

7. Dispositif (1) de fabrication d'une suspension selon l'une quelconque des revendications 1 à 3, dans lequel la partie d'arbre centrale (5E) présente une forme rectangulaire ou une forme de plaque à laquelle la paire de parties de lame horizontales (5B) sont couplés de manière régulière l'une à l'autre.

8. Dispositif (1) de fabrication d'une suspension selon la revendication 4, dans lequel

la deuxième lame (5) comporte deux paires des parties de couplage, les parties de lame verticales (5A) et les parties de lame horizontales (5B), et
les parties de couplage, les parties de lame verticales (5A) et les parties de lame horizontales (5B) sont respectivement disposées décalées, chacune, d'un angle de 90 degrés autour de la partie de fixation.

9. Dispositif (1) de fabrication d'une suspension selon l'une quelconque des revendications 1 à 3, dans lequel, dans la deuxième lame (5), les parties de lame horizontales (5B) présentent respectivement des surfaces inclinées par rapport aux parties de lame verticales (5A).

10. Dispositif (1) de fabrication d'une suspension selon l'une quelconque des revendications 1 à 3, dans lequel les parties de lame horizontales (5B) de la deuxième lame (5) font que les matériaux circulent vers le haut dans le récipient (2).

11. Dispositif (1) de fabrication d'une suspension selon l'une quelconque des revendications 1 à 3, dans lequel les premières lames (4) comportent respectivement des surfaces inclinées qui sont inclinées par rapport à une direction verticale du récipient (2).

12. Dispositif (1) de fabrication d'une suspension selon l'une quelconque des revendications 1 à 3, dans lequel les premières lames (4) font que les matériaux circulent vers le haut ou vers le bas dans le récipient (2).

13. Dispositif (1) de fabrication d'une suspension selon l'une quelconque des revendications 1 à 3, dans lequel l'espace libre varie entre 2 et 100 mm.

## FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012133931 A

- CN 104368284 A